# FASCICULE DE BREVET EUROPEEN

(11) **EP 2 415 644 B1**
(45) Date de publication et mention de la délivrance du brevet: **19.06.2013**
(21) Numéro de dépôt: 11006334.4
(22) Date de dépôt: 02.08.2011
(51) Int. Cl.: B60R 25/00

(54) **Procédé de surveilance destiné à garantir l`absence, à l`intérieur et autour d`un véhicule, de boîtiers portables de commande d`un systéme d`accés mains libres au dit véhicule**
Verfahren zum überprüfen der Abwesentheit, in und rundum eines Kraffahrzeuges, von tragbare Steuergeräte eines passives Zugangssystems eines Kraftfahrzeuges
Methode for detecting the absence, inside and surrounding the vehicle, of portable control devices of a passive entry system for vehicles

(30) Priorité: 06.08.2010 FR 1003299
(43) Date de publication de la demande: 08.02.2012
(73) Titulaire: Continental Automotive France, 31100 Toulouse (FR); Continental Automotive GmbH, 30165 Hannover (DE)
(72) Inventeur: Brillon, Alain, 31270 Villeneuve Tolosane (FR); Verdon, Isabelle, 31700 Cornebarrieu (FR); Farinier, Jean-Michel, 31120 Lacroix-Falgarde (FR)

(56) Documents cités:
- EP-A1- 1 820 704
- EP-A1- 1 965 355
- DE-A1- 10 346 643
- US-A1- 2006 290 503
- US-A1- 2007 120 644

## Description

L'invention concerne un procédé de surveillance destiné à garantir l'absence, à l'intérieur et autour d'un véhicule, de boîtiers portables de commande d'un système d'accès mains libres au dit véhicule.

Les dispositifs d'accès mains libres à un véhicule comportent classiquement un jeu de deux ou plusieurs boîtiers portables de commande à distance dédiés et affectés au véhicule, une unité centrale embarquée dans le véhicule, et des moyens de transmission, d'une part, disposés dans le dit véhicule, et d'autre part, intégrés dans chaque boîtier de commande, et adaptés pour permettre d'instaurer un dialogue entre l'unité centrale et le boîtier de commande en vue de la mise en oeuvre de fonctions prédéterminées.

De plus en plus de véhicules automobiles sont actuellement équipés de tels systèmes d'accès mains libres conçus notamment de façon à :
- autoriser un déverrouillage automatique des portières d'un véhicule suite à l'identification d'un boîtier de commande par l'unité centrale dans une zone d'étendue prédéfinie autour du véhicule,
- commander un verrouillage automatique des portières du véhicule en l'absence de boîtiers de commande dans la zone couverte par les moyens de transmission embarqués dans le véhicule.

Certaines de ces fonctions, telle que la fonction précitée de verrouillage automatique des portières, imposent de s'assurer, avant d'être mises en oeuvre, de l'absence de boîtiers de commande dédiés dans la zone couverte par les moyens de transmission embarqués dans le véhicule.

A titre d'autre fonction requérant cette vérification préalable, on peut également citer la fonction précitée de déverrouillage automatique à l'approche du véhicule. Cette fonction doit, en effet, intégrer une commande consistant à condamner à nouveau les portières, de façon automatique, dans l'hypothèse où l'utilisateur s'éloigne du véhicule sans avoir ouvert de portière.

La méthode actuelle, (telle que décrite dans le document US2007/0120644) mise en oeuvre en vue de s'assurer de l'absence de boîtiers de commande dédiés, dans la zone de couverture des moyens de transmission embarqués dans un véhicule, réside dans une procédure de recherche consistant :
- à commander l'émission périodique, par les dits moyens de transmission embarqués, d'un signal de demande d'identification reconnaissable par les boîtiers de commande dédiés, les dits boîtiers de commande étant programmés pour émettre, en réponse, avec un protocole intégrant un mécanisme anticollision, des signaux d'identification à destination de l'unité centrale embarquée dans le véhicule,
- et, en l'absence de réponse à un nombre prédéterminé de signaux successifs de demande d'identification, à conclure à l'absence de boîtier de commande dans la zone couverte par les moyens de transmission embarqués dans le véhicule.

Cette procédure de recherche consiste donc à rechercher, en parallèle, avec un mode de surveillance périodique, tous les boîtiers de commande dédiés au véhicule situés dans la zone de couverture des moyens de transmission embarqués dans le dit véhicule.

Une telle procédure s'avère d'une fiabilité non contestée mais elle présente toutefois un inconvénient majeur. En effet, cette procédure impose l'utilisation d'un protocole intégrant un mécanisme anticollision qui s'avère consommateur de temps d'occupation des médias de communication, et consommateur d'énergie pour tous les boîtiers de commande impliqués.

Ces consommations de temps et d'énergie se trouvent, en outre, augmentées du fait de la nécessité d'effectuer une surveillance périodique rapide en vue d'obtenir un temps de réponse non perceptible par l'utilisateur.

La présente invention vise à pallier cet inconvénient et a pour principal objectif de fournir un procédé de surveillance conduisant à réduire de façon notable, par rapport à la procédure de recherche mise en oeuvre actuellement, les consommations en termes de temps d'occupation des médias de communication et d'énergie pour les boîtiers de commande impliqués.

A cet effet l'invention vise un procédé de surveillance destiné à garantir, dans une zone de couverture prédéterminée s'étendant à l'intérieur et autour d'un véhicule, l'absence de boîtiers portables de commande à distance d'un système d'accès mains libres composé d'une unité centrale embarquée dans le véhicule et d'un jeu d'au moins deux boîtiers de commande à distance dédiés et affectés au dit véhicule, la dite unité centrale et chacun des dits boîtiers de commande comprenant des moyens de transmission aptes à leur permettre de dialoguer en vue de la mise en oeuvre de fonctions prédéterminées telles que verrouillage et déverrouillage du véhicule.

Ce procédé de surveillance comporte :
- une étape d'identification (a) consistant à commander l'émission, par les moyens de transmission embarqués dans le véhicule, d'un signal de demande d'identification reconnaissable par les boîtiers de commande dédiés, en réponse duquel les dits boîtiers de commande sont programmés pour émettre, avec un protocole intégrant un mécanisme anticollision, un signal d'identification à destination de l'unité centrale embarquée dans le véhicule,
- une étape de surveillance périodique (b) mise en oeuvre lors de la réception par l'unité centrale d'un signal d'identification en provenance d'un boîtier de commande dédié,
- et une étape de confirmation (c) mise en oeuvre en l'absence de réponse à un signal de demande d'identification lors de l'étape d'identification (a) ou lors de l'étape de surveillance périodique (b), et, en premier lieu, consistant à commander l'émission successive par les moyens de transmission embarqués dans le véhicule, d'un nombre n de signaux de demande d'identification reconnaissables par les boîtiers de commande dédiés, en réponse desquels les dits boîtiers de commande dédiés sont programmés pour émettre, avec un protocole intégrant un mécanisme anticollision, des signaux d'identification à destination de l'unité centrale (2) embarquée dans le véhicule, et en second lieu, consistant :
   - lors de la réception d'un signal d'identification en provenance d'un boîtier de commande dédié, à déclencher la mise en oeuvre d'une nouvelle étape (b) de surveillance périodique du dit boîtier de commande identifié,
   - et en l'absence de réponse aux n signaux de demande d'identification, à confirmer l'absence de boîtier de commande dédié dans la zone de couverture.

Selon l'invention l'étape de surveillance périodique (b) consiste à commander l'émission périodique, par les moyens de transmission embarqués dans le véhicule, d'un signal de demande d'identification reconnaissable uniquement par le boîtier de commande identifié, en réponse duquel le dit boîtier de commande est programmé pour émettre, avec un protocole dépourvu de mécanisme anticollision, un signal d'identification à destination de l'unité centrale embarquée dans le véhicule.

Ce procédé de surveillance comporte donc une étape préliminaire d'identification (a) très courte consistant à commander l'émission d'un signal de demande d'identification unique à destination de tous les boîtiers de commande dédiés en vue de sélectionner :
- soit une étape de confirmation de l'absence de boîtier de commande, en l'absence de réponse au signal de demande d'identification émis lors de cette étape préliminaire,
- soit une étape de surveillance périodique de la présence d'un seul boîtier de commande lors de la réception d'une réponse au signal de demande d'identification émis lors de cette étape préliminaire.

De plus, l'étape de confirmation selon l'invention constitue également une étape de faible durée maximale (émission d'un nombre maximal de n signaux de demande d'identification) elle-même suivie d'une nouvelle étape de surveillance périodique lors de la réception d'un signal d'identification.

Par conséquent, le procédé selon l'invention consiste à mettre en oeuvre :
- deux étapes, identification (a) et confirmation (c) de faible durée consistant en des étapes durant lesquelles tous les boîtiers de commandes dédiés au véhicule sont recherchés et émettent des signaux d'identification avec un protocole intégrant un mécanisme anticollision,
- une étape de surveillance périodique (b) susceptible de constituer une étape de longue durée, durant laquelle un seul boîtier de commande est surveillé et émet des signaux d'identification avec un protocole dépourvu de mécanisme anticollision.

Ainsi, durant la seule étape susceptible de se prolonger, un seul boîtier de commande est sollicité avec, en outre, un protocole simplifié n'intégrant pas de mécanisme anticollision.

Un tel procédé de surveillance consiste donc à combiner deux formules d'interrogation des boîtiers de commande et conduit, grâce à la conception du mode interrogatoire mis en oeuvre durant l'étape de surveillance périodique (b), à une réduction notable de la consommation globale en termes de temps d'occupation des médias de communication et d'énergie pour les boîtiers de commande impliqués.

Selon un mode de mise en oeuvre avantageux du procédé selon l'invention, la période d'émission des signaux de demande d'identification lors de l'étape de surveillance périodique (b) est sélectionnée de façon à être plus longue que la période d'émission des signaux de demande d'identification lors de l'étape d'identification (a).

Cet allongement de la période d'émission durant l'étape de surveillance périodique est autorisé par le mode d'interrogation mis en oeuvre pendant cette étape et conduit à réduire la sollicitation des moyens de transmission du véhicule et des boîtiers de commande.

Selon un autre mode de mise en oeuvre avantageux du procédé selon l'invention, lors de la détection d'au moins deux boîtiers de commande dédiés durant l'étape d'identification (a) ou l'étape de confirmation (c), on sélectionne, par exemple par un mode de sélection aléatoire, un des dits boîtiers de commande en vue de la mise en oeuvre de l'étape périodique de surveillance (b).

Par ailleurs, lorsque le procédé de surveillance selon l'invention est mis en oeuvre en vue de garantir l'absence de boîtiers portables de commande à distance d'un système d'accès mains libres comportant g groupes de moyens de transmission connectés à l'unité centrale, avec g ≥ 2, conçus pour couvrir chacun une zone partielle de la zone globale de couverture, ce procédé consiste avantageusement, lors de la détection d'un boîtier de commande durant l'étape d'identification (a), ainsi que lors de la détection éventuelle d'un boîtier de commande durant l'étape de confirmation (c), à identifier le boîtier de commande ainsi que la zone partielle dans laquelle est détecté le dit boîtier de commande, de façon à mettre en oeuvre une étape de surveillance périodique (b) s'appliquant au boîtier de commande identifié et à la seule zone partielle identifiée.

Ce mode de mise en oeuvre s'avère particulièrement avantageux lorsque l'unité centrale n'est pas dimensionnée pour permettre d'interroger simultanément toutes les antennes équipant le véhicule et couvrant la zone globale de couverture. Dans ce cas, en effet, le procédé selon l'invention permet, grâce à la limitation de la zone surveillée à une zone partielle couverte par un seul groupe de moyens de transmission, de réduire le nombre de signaux de demande d'identification émis pendant l'étape de surveillance périodique (b).

Selon un autre mode de mise en oeuvre avantageux, le procédé de surveillance selon l'invention consiste :
- à programmer les boîtiers portables de commande de façon qu'ils présentent, en outre, lors l'étape de surveillance périodique (b), un mode de surveillance de la réception des signaux périodiques de demande d'identification selon lequel, lors d'une absence de réception d'un signal de demande d'identification, l'émission d'un signal spécifique spontané est substituée à l'émission d'un signal d'identification,
- à mettre en oeuvre simultanément et en parallèle, une procédure de traitement des signaux spontanés et l'étape de confirmation (c).

Ce traitement simultané et en parallèle de la procédure de traitement des signaux spontanés et de l'étape de confirmation (c) conduit à optimiser le temps de réponse et à obtenir un temps de réponse quasi constant.

D'autres caractéristiques, buts et avantages de l'invention, ressortiront de la description détaillée qui suit en référence aux dessins annexés qui en représentent à titre d'exemple non limitatif un mode de réalisation préférentiel. Sur ces dessins :
- la figure 1 est une vue de dessus schématique d'un véhicule équipé d'un système d'accès mains libres,
- la figure 2 est un organigramme représentant les diverses étapes du procédé de surveillance selon l'invention,
- la figure 3 est un schéma représentatif du protocole mis en oeuvre lors des étapes d'identification (a) et de confirmation (c),
- et la figure 4 est un schéma représentatif du protocole mis en oeuvre lors de l'étape de surveillance périodique (b).

Le procédé selon l'invention consiste en un procédé de surveillance mis en oeuvre lors de l'utilisation d'un dispositif usuellement connu sous l'appellation « système d'accès mains libres » adapté pour permettre d'accéder à un véhicule 1 et éventuellement de démarrer ce dernier grâce à l'identification de boîtiers portables 7, 9 de commande à distance dédiés et affectés au dit véhicule.

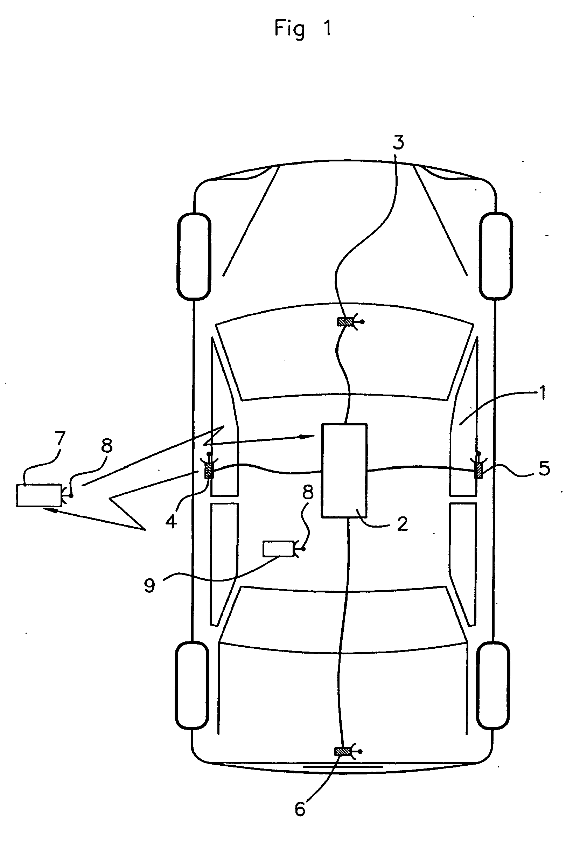

De façon usuelle et tel que représenté à la figure 1, un tel système d'accès mains libres comprend, en premier lieu, des antennes 3-6 disposées à l'intérieur (antenne 3) et à l'extérieur (antennes 4-6) du véhicule 1, et connectées à une unité centrale 2 embarquée dans le dit véhicule et dotée d'un calculateur intégrant un émetteur basse fréquence « LF » et un récepteur radio fréquence « RF ».

Selon l'exemple représenté, en outre, les antennes extérieures sont respectivement positionnées sur les portières latérales (antennes 4 et 5) et sur la portière d'accès au coffre (antenne 6) du véhicule 1.

Les boîtiers de commande 7, 9 de ce système d'accès mains libres comprennent, quant à eux, classiquement, un calculateur intégrant un récepteur basse fréquence « LF » et un émetteur radio fréquence « RF » connectés à des antennes telle que 8.

De façon usuelle, de tels systèmes d'accès mains libres sont notamment conçus de façon à :
- autoriser un déverrouillage automatique des portières d'un véhicule 1 suite à l'identification d'un boîtier de commande 7, 9 dans la zone de couverture des antennes 3-6,
- commander un verrouillage automatique des portières du véhicule 1 en l'absence de boîtiers de commande 7, 9 dans la zone de couverture des antennes 3-6.

Ces deux fonctions, ainsi qu'éventuellement d'autres fonctions gérées par le système d'accès mains libres, imposent en outre de s'assurer, avant d'être mises en oeuvre, de l'absence de boîtiers de commande dédiés 7, 9 dans la zone couverte par les antennes 3-6 embarquées dans le véhicule 1, et l'objet de l'invention consiste, à cet effet, en un procédé de surveillance destiné à garantir l'absence de boîtiers de commande 7, 9 dédiés et affectés à un véhicule 1, dans la zone couverte par les antennes 3-6 embarquées dans le dit véhicule.

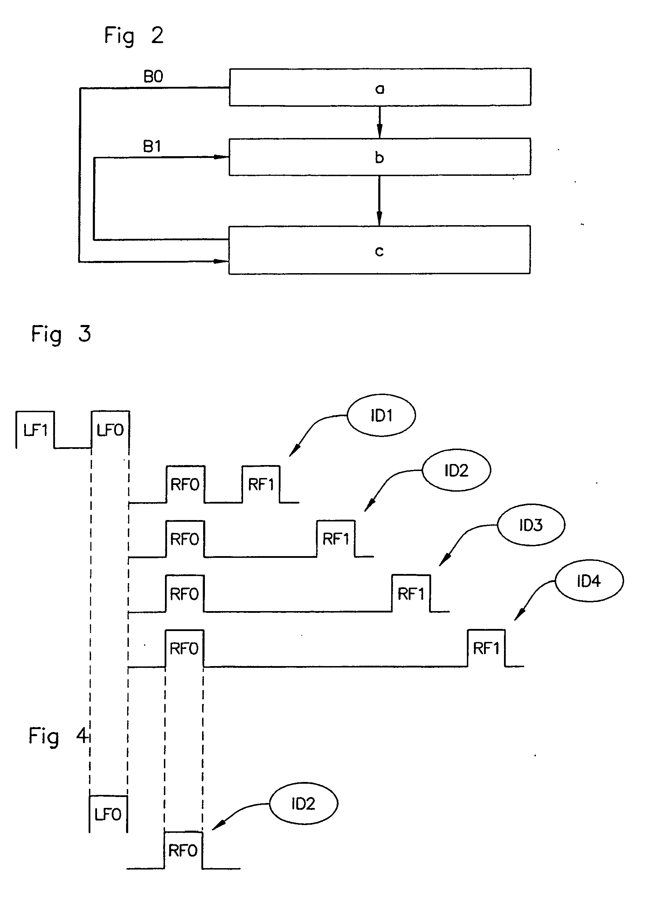

Ce procédé de surveillance est décrit en détail ci-dessous en référence aux figures 2 à 4 annexées, en relation avec un système d'accès mains libres comportant :
- une unité centrale 2 programmée de façon que la zone de couverture des antennes 3-6 soit divisée en deux sous zones consistant par exemple en la zone couverte par l'antenne intérieure 3 et en la zone couverte par les antennes extérieures 4-6,
- quatre boîtiers de commande (dont seulement deux boitiers de commande 7, 9 sont représentés à la figure 1) affectés et dédiés au véhicule 1.

Tel que représenté à la figure 2, ce procédé de surveillance comporte une étape d'identification (a) initiale consistant à commander l'émission d'un signal unique de demande d'identification reconnaissable par tous les boîtiers de commande 7, 9 affectés au véhicule 1, en réponse duquel les dits boîtiers de commande sont programmés pour émettre, avec un protocole intégrant un mécanisme anticollision, un signal d'identification à destination de l'unité centrale 2.

La figure 3 illustre un exemple de protocole intégrant un mécanisme anticollision utilisé lors de cette étape d'identification.

Selon ce protocole, l'unité centrale 2 commande l'émission d'un signal de demande d'identification comportant une trame de données LF0 destinée à être émise au moyen de l'antenne intérieure 3 et une trame de données LF1 destinée à être émise au moyen des antennes extérieures 4-6.

A réception de ce signal de demande d'identification, chacun des boîtiers de commande 7, 9 est quant à lui programmé pour délivrer deux trames de données RF0 et RF1 comportant chacune des données d'identification ID1-ID4 du dit boîtier de commande, avec un intervalle de temps entre l'émission des deux trames RF0 et RF1 de valeur prédéterminée différente d'un boîtier de commande par rapport aux trois autres boîtiers de commande.

Ainsi, dans l'hypothèse d'une collision entre les trames de données RF0 émises par deux boîtiers de commande, ce protocole anticollision permet une identification par réception d'une au moins des trames de données RF1.

Tel que représenté à la figure 2, en l'absence de réception d'une trame de données RF0 ou RF1 en réponse aux trames de données LF0 et/ou LF1, le procédé de surveillance se poursuit (cf. flèche B0) par une étape de confirmation (c) qui sera décrite plus loin.

Par contre, lors de la réception d'une trame de données RF0 ou RF1 en réponse aux trames de données LF0 et/ou LF1, l'étape suivante consiste en une étape (b) de surveillance périodique de la présence du boîtier de commande identifié lors de l'étape initiale d'identification (a), dans la sous zone dans laquelle ce boîtier de commande a été identifié.

A cet effet, cette étape de surveillance périodique (b) consiste à commander l'émission périodique, par l'antenne intérieure 3 ou le groupe d'antennes extérieures 4-6, selon la sous zone dans laquelle a été identifié le boîtier de commande, d'un signal de demande d'identification reconnaissable uniquement par ce boîtier de commande, en réponse duquel ce dernier est programmé pour émettre, avec un protocole dépourvu de mécanisme anticollision, un signal d'identification à destination de l'unité centrale 2.

Il est à noter que dans l'hypothèse où plusieurs boîtiers de commande sont identifiés durant l'étape d'identification (a), l'étape de surveillance périodique est précédée d'une étape de sélection (non représentée) consistant à sélectionner un des dits boîtiers de commande par un mode de sélection aléatoire.

La figure 4 illustre un exemple de protocole dépourvu de mécanisme anticollision utilisé lors de cette étape de surveillance périodique (b), et qui se résume, du fait de la recherche d'un seul boîtier de commande dans une sous zone donnée :
- à commander l'émission périodique d'un signal de demande d'identification comportant une trame de données LF0 destinée à être émise au moyen soit de l'antenne intérieure 3 soit des antennes extérieures 4-6,
- à programmer les boîtiers de commande de façon que le boîtier de commande identifié délivre une seule trame de données RF0 comportant des données d'identification (en l'exemple ID2) du dit boîtier de commande.

En l'absence de réponse à un signal de demande d'identification lors de cette étape de surveillance périodique (b) ou, tel que précité, lors de l'étape d'identification (a), l'étape suivante réside dans une étape (c) de confirmation de l'absence de boîtier de commande dans la zone de couverture globale.

Cette procédure de confirmation (c) consiste à commander l'émission successive de n signaux de demande d'identification identiques au signal émis lors la procédure d'identification (a), reconnaissables par tous les boîtiers de commande 7, 9 affectés au véhicule 1, en réponse desquels les dits boîtiers de commande sont programmés pour émettre, avec le même protocole que le protocole intégrant un mécanisme anticollision utilisé lors de la procédure d'identification (a), un signal d'identification à destination de l'unité centrale 2.

Il est à noter que le nombre n de signaux de demande d'identification est communément défini en fonction de la robustesse du filtrage LF et RF souhaitée et du temps de réponse dévolu à la procédure de surveillance.

Il est également à noter que cette étape de confirmation (c) peut être précédée d'une étape de sélection dans l'hypothèse où plusieurs boîtiers de commande sont identifiés durant l'étape d'identification (a).

Une telle étape de confirmation (c) permet de confirmer l'absence de boîtier de commande dans la zone de couverture des antennes 3-6, en l'absence de réponse aux n signaux de demande d'identification.

Par contre, lors de la réception d'un signal d'identification en provenance d'un boîtier de commande 7, 9, cette procédure de confirmation (c) conduit au déclenchement (cf. flèche B1) d'une nouvelle étape (b) de surveillance périodique du dit boîtier de commande identifié, dans la sous zone dans laquelle ce dernier a été identifiée.

Il est à noter qu'en option, lorsque la confirmation de l'absence de boîtiers de commande constitue un critère de décision critique pour la fonction concernée (par exemple, fonction de condamnation automatique à l'éloignement), les boîtiers de commande peuvent en outre être programmés de façon qu'ils présentent, lors l'étape de surveillance périodique (b), un mode de surveillance de la réception des signaux périodiques de demande d'identification selon lequel, lors d'une absence de réception d'un signal de demande d'identification, l'émission d'un signal spécifique spontané est substituée à l'émission d'un signal d'identification.

Sans ce cas, en outre, selon l'invention, et à des fins de réduction du temps de réponse de la procédure globale de surveillance, la procédure de traitement des signaux spontanés et l'étape de confirmation (c) sont mises en oeuvre simultanément et en parallèle.

## Revendications

1. Procédé de surveillance destiné à garantir, dans une zone de couverture prédéterminée s'étendant à l'intérieur et autour d'un véhicule (1), l'absence de boîtiers portables (7, 9) de commande à distance d'un système d'accès mains libres composé d'une unité centrale (2) embarquée dans le véhicule (1) et d'un jeu d'au moins deux boîtiers de commande à distance (7, 9) dédiés et affectés au dit véhicule, la dite unité centrale et chacun des dits boîtiers de commande comprenant des moyens de transmission (3-6, 8) aptes à leur permettre de dialoguer en vue de la mise en oeuvre de fonctions prédéterminées telles que verrouillage et déverrouillage du véhicule (1), le dit procédé de surveillance comportant les étapes suivantes :
• une étape d'identification (a) consistant à commander l'émission, par les moyens de transmission (3-6) embarqués dans le véhicule (1), d'un signal de demande d'identification reconnaissable par les boîtiers de commande dédiés (7, 9), en réponse duquel les dits boîtiers de commande sont programmés pour émettre, avec un protocole intégrant un mécanisme anticollision, un signal d'identification à destination de l'unité centrale (2) embarquée dans le véhicule (1),
• une étape de surveillance périodique (b) mise en oeuvre lors de la réception par l'unité centrale d'un signal d'identification en provenance d'un boîtier de commande dédié (7, 9),
• et une étape de confirmation (c) mise en oeuvre en l'absence de réponse à un signal de demande d'identification lors de l'étape d'identification (a) ou lors de l'étape de surveillance périodique (b), et, en premier lieu, consistant à commander l'émission successive par les moyens de transmission (3-6) embarqués dans le véhicule (1), d'un nombre n de signaux de demande d'identification reconnaissables par les boîtiers de commande dédiés (7, 9), en réponse desquels les dits boîtiers de commande dédiés sont programmés pour émettre, avec un protocole intégrant un mécanisme anticollision, des signaux d'identification à destination de l'unité centrale (2) embarquée dans le véhicule (1), et en second lieu, consistant :
- lors de la réception d'un signal d'identification en provenance d'un boîtier de commande dédié (7, 9), à déclencher la mise en oeuvre d'une nouvelle étape (b) de surveillance périodique du dit boîtier de commande identifié,
- et en l'absence de réponse aux n signaux de demande d'identification, à confirmer l'absence de boîtier de commande dédié (7, 9) dans la zone de couverture,
le dit procédé de surveillance étant **caractérisé en ce que** l'étape de surveillance périodique (b) consiste à commander l'émission périodique, par les moyens de transmission (3-6) embarqués dans le véhicule (1), d'un signal de demande d'identification reconnaissable uniquement par le boîtier de commande (7) identifié, en réponse duquel le dit boîtier de commande est programmé pour émettre, avec un protocole dépourvu de mécanisme anticollision, un signal d'identification à destination de l'unité centrale (2) embarquée dans le véhicule (1).

2. Procédé de surveillance selon la revendication 1 **caractérisé en ce que** la période d'émission des signaux de demande d'identification lors de l'étape de surveillance périodique (b) est sélectionnée de façon à être plus longue que la période d'émission des signaux de demande d'identification lors de l'étape d'identification (a).

3. Procédé de surveillance selon l'une des revendications 1 ou 2 **caractérisé en ce que**, lors de la détection d'au moins deux boîtiers de commande dédiés (7, 9) durant l'étape d'identification (a) ou l'étape de confirmation (c), on sélectionne, par exemple par un mode de sélection aléatoire, un des dits boîtiers de commande en vue de la mise en oeuvre de l'étape périodique de surveillance (b).

4. Procédé de surveillance selon l'une des revendications précédentes destiné à garantir l'absence de boîtiers portables de commande à distance (7, 9) d'un système d'accès mains libres comportant g groupes de moyens de transmission (3-6) connectés à l'unité centrale (2), avec g ≥ 2, conçus pour couvrir chacun une zone partielle de la zone globale de couverture, **caractérisé en ce que**, lors de la détection d'un boîtier de commande (7) durant l'étape d'identification (a), ainsi que lors de la détection éventuelle d'un boîtier de commande (7) durant l'étape de confirmation (c), on identifie le boîtier de commande ainsi que la zone partielle dans laquelle est détecté le dit boîtier de commande, de façon à mettre en oeuvre une étape de surveillance périodique (b) s'appliquant au boîtier de commande identifié et à la seule zone partielle identifiée.

5. Procédé de surveillance selon l'une des revendications précédentes **caractérisé en ce qu'**il consiste :
• à programmer les boîtiers portables de commande (7, 9) de façon qu'ils présentent, en outre, lors l'étape de surveillance périodique (b), un mode de surveillance de la réception des signaux périodiques de demande d'identification selon lequel, lors d'une absence de réception d'un signal de demande d'identification, l'émission d'un signal spécifique spontané est substituée à l'émission d'un signal d'identification,
• à mettre en oeuvre simultanément et en parallèle, une procédure de traitement des signaux spontanés et l'étape de confirmation (c).

## Patentansprüche

1. Überwachungsverfahren, dazu bestimmt, in einem vorbestimmten Erfassungsbereich, der sich ins Innere eines Fahrzeugs (1) und um dieses herum erstreckt, die Abwesenheit von tragbaren Fernsteuergeräten (7, 9) eines passiven Zugangssystems sicherzustellen, das aus einer an Bord des Fahrzeugs (1) befindlichen Zentraleinheit und einem Satz von mindestens zwei Fernsteuergeräten (7, 9) zusammengesetzt ist, die dem Fahrzeug zugeordnet und für es bestimmt sind, wobei die Zentraleinheit und jedes der Steuergeräte Übertragungsmittel (3-6) aufweisen, die dazu geeignet sind, ihnen zu ermöglichen, hinsichtlich der Ausführung von vorbestimmten Funktionen zu kommunizieren, wie der Verriegelung und Entriegelung des Fahrzeugs (1), wobei das Überwachungsverfahren die folgenden Schritte umfasst:
• einen Identifikationsschritt (a), der daraus besteht, das Aussenden eines Signals zur Identifikationsanforderung durch die an Bord des Fahrzeugs (1) befindlichen Übertragungsmittel (3-6) zu befehlen, das von den zugeordneten Steuergeräten (7, 9) erkannt werden kann, wobei die Steuergeräte dazu programmiert sind, in Reaktion auf dieses mit einem Protokoll, in das ein Mechanismus gegen Datenkollision integriert ist, ein für die an Bord des Fahrzeugs (1) befindliche Zentraleinheit (2) bestimmtes Identifikationssignal auszusenden,
• einen Schritt der periodischen Überwachung (b), der bei dem Empfang eines von einem zugeordneten Steuergerät (7, 9) stammenden Identifikationssignals durch die Zentraleinheit durchgeführt wird,
• und einen Bestätigungsschritt (c), der bei Abwesenheit einer Reaktion auf ein Signal zur Identifikationsanforderung bei dem Identifikationsschritt (a) oder bei dem Schritt der periodischen Überwachung (b) durchgeführt wird und zuerst darin besteht, die aufeinander folgende Aussendung einer Anzahl von Signalen zur Identifikationsanforderung, die von den zugeordneten Steuergeräten (7, 9) erkannt werden können, durch die an Bord des Fahrzeugs (1) befindlichen Übertragungsmittel (3-6) zu befehlen, wobei die Steuergeräte dazu programmiert sind, in Reaktion auf diese mit einem Protokoll, in das ein Mechanismus gegen Datenkollision integriert ist, / ein für die an Bord des Fahrzeugs (1) befindliche Zentraleinheit (2) bestimmtes Identifikationssignal auszusenden, und der daraufhin darin besteht:
- bei dem Empfang eines von einem zugeordneten Steuergerät (7, 9) stammenden Identifikationssignals die Durchführung eines neuen Schritts (b) der periodischen Überwachung des identifizierten Steuergerätes auszulösen,
- und bei Abwesenheit einer Reaktion auf die n Signale zur Identifikationsanforderung die Abwesenheit von zugeordneten Steuergeräten (7, 9) in dem Erfassungsbereich zu bestätigen,
wobei das Überwachungsverfahren **dadurch gekennzeichnet ist, dass** der Schritt der periodischen Überwachung (b) darin besteht, das periodische Aussenden eines Signals zur Identifikationsanforderung durch die an Bord des Fahrzeugs (1) befindlichen Übertragungsmittel (3-6) zu befehlen, das ausschließlich von dem identifizierten Steuergerät (7) erkannt werden kann, wobei das Steuergerät dazu programmiert ist, in Reaktion auf dieses mit einem Protokoll, das keinen Mechanismus gegen Datenkollision enthält, ein für die an Bord des Fahrzeugs (1) befindliche Zentraleinheit (2) bestimmtes Identifikationssignal auszusenden.

2. Überwachungsverfahren gemäß Anspruch 1, **dadurch gekennzeichnet, dass** die Periode der Aussendung der Signale zur Identifikationsanforderung bei dem Schritt der periodischen Überwachung (b) so gewählt ist, dass sie länger ist als die Periode der Aussendung der Signale zur Identifikationsanforderung bei dem Identifikationsschritt (a).

3. Überwachungsverfahren gemäß einem der Ansprüche 1 oder 2, **dadurch gekennzeichnet, dass** bei dem Auffinden von mindestens zwei zugeordneten Steuergeräten (7, 9) bei dem Identifikationsschritt (a) oder dem Bestätigungsschritt (c) eines der Steuergeräte hinsichtlich der Ausführung des Schrittes der periodischen Überwachung (b) beispielsweise mittels eines zufalls-Auswahlverfahrens ausgewählt wird.

4. Überwachungsverfahren gemäß einem der vorhergehenden Ansprüche, dazu bestimmt, die Abwesenheit von tragbaren Fernsteuergeräten (7, 9) eines passiven Zugangssystems sicherzustellen, das g Gruppen von mit der Zentraleinheit (2) verbundenen Übertragungsmitteln (3-6) aufweist mit g ≥ 2, die dazu konzipiert sind, jeweils einen Teilbereich des gesamten Erfassungsbereiches zu erfassen, **dadurch gekennzeichnet dass** bei dem Auffinden eines Steuergerätes während des Identifikationsschritts (a), ebenso wie bei dem eventuellen Auffinden eines Steuergerätes während des Bestätigungsschrittes (c), das Steuergerät ebenso identifiziert wird wie der Teilbereich, in dem das Steuergerät aufgefunden wurde, um einen Schritt der periodischen Überwachung (b) durchzuführen, der auf das identifizierte Steuergerät und nur auf den identifizierten Teilbereich Anwendung findet.

5. Überwachungsverfahren gemäß einem der vorhergehenden Ansprüche, **dadurch gekennzeichnet, dass** es besteht aus:
• dem Programmieren der tragbaren Steuergeräte (7, 9) derart, dass sie ferner bei dem Schritt der periodischen Überwachung (b) einen Modus der Überwachung des Empfangs der periodischen Signale zur Identifikationsanforderung aufweisen, dem zu Folge bei einer Abwesenheit des Empfangs eines Signals zur Identifikationsanforderung die Aussendung eines Signals zur Identifikation durch die Aussendung eines spezifischen spontanen Signals ersetzt wird,
• dem simultanen und parallelen Ausführen eines Verfahrens zur Bearbeitung der spontanen Signale und des Bestätigungsschrittes (c).

## Claims

1. Monitoring method intended to guarantee, in a predetermined coverage area extending inside and around a vehicle (1), the absence of portable remote control devices (7, 9) of a hands-free access system consisting of a central processing unit (2) embedded in the vehicle (1) and a set of at least two remote control devices (7, 9) dedicated and assigned to said vehicle, said central processing unit and each of said control devices comprising transmission means (3-6, 8) suitable for enabling them to dialogue in order to implement predetermined functions such as locking and unlocking the vehicle (1), said monitoring method comprising the following steps:
• an identification step (a) consisting in ordering the transmission, by the transmission means (3-6) embedded in the vehicle (1), of an identification request signal that can be recognized by the dedicated control devices (7, 9), in response to which said control devices are programmed to transmit, with a protocol incorporating a collision-prevention mechanism, an identification signal to the central processing unit (2) embedded in the vehicle (1),
• a periodic monitoring step (b) implemented upon the reception by the central processing unit of an identification signal from a dedicated control device (7, 9),
• and a confirmation step (c) implemented in the absence of response to an identification request signal during the identification step (a) or during the periodic monitoring step (b), and, firstly, consisting in ordering the successive transmission by the transmission means (3-6) embedded in the vehicle (1) of a number n of identification request signals that can be recognized by the dedicated control devices (7, 9), in response to which said dedicated control devices are programmed to transmit, with a protocol incorporating a collision-prevention mechanism, identification signals to the central processing unit (2) embedded in the vehicle (1), and, secondly, consisting:
- upon the reception of an identification signal from a dedicated control device (7, 9), in triggering the implementation of a new periodic monitoring step (b) for said identified control device,
- and in the absence of response to the n identification request signals, in confirming the absence of dedicated control device (7, 9) in the coverage area,
said monitoring method being **characterized in that** the periodic monitoring step (b) consists in ordering the periodic transmission, by the transmission means (3-6) embedded in the vehicle (1), of an identification request signal that can be recognized only by the identified control device (7), in response to which said control device is programmed to transmit, with a protocol lacking any collision-prevention mechanism, an identification signal to the central processing unit (2) embedded in the vehicle (1).

2. Monitoring method according to Claim 1, **characterized in that** the transmission period of the identification request signals during the periodic monitoring step (b) is selected in such a way as to be longer than the transmission period of the identification request signals during the identification step (a).

3. Monitoring method according to one of Claims 1 or 2, **characterized in that**, upon the detection of at least two dedicated control devices (7, 9) during the identification step (a) or the confirmation step (c), one of said control devices is selected, for example by a random selection mode, in order to implement the periodic monitoring step (b).

4. Monitoring method according to one of the preceding claims intended to guarantee the absence of portable remote control devices (7, 9) of a hands-free access system comprising g groups of transmission means (3-6) connected to the central processing unit (2), with g ≥ 2, designed for each to cover a partial area of the overall coverage area, **characterized in that**, upon the detection of a control device (7) during the identification step (a), and upon the possible detection of a control device (7) during the confirmation step (c), the control device, as well as the partial area in which said control device is detected, is identified so as to implement a periodic monitoring step (b) that is applied to the identified control device and to only the identified partial area.

5. Monitoring method according to one of the preceding claims, **characterized in that** it consists:
• in programming the portable control devices (7, 9) so that they present, in addition, during the periodic monitoring step (b), a monitoring mode for the reception of the periodic identification request signals according to which, upon an absence of reception of an identification request signal, the transmission of a spontaneous specific signal is substituted for the transmission of an identification signal,
• in implementing, simultaneously and in parallel, a procedure for processing the spontaneous signals and the confirmation step (c).
